# EUROPEAN PATENT SPECIFICATION

(11) **EP 4 206 950 B1**
(45) Date of publication and mention of the grant of the patent: **26.03.2025**
(21) Application number: 21929141.6
(22) Date of filing: 09.09.2021
(51) Int. Cl.: G06F 16/35, G06F 21/55, H04L 9/40, G06F 21/57

(54) **UNAUTHORIZED INTRUSION ANALYSIS ASSISTANCE DEVICE AND UNAUTHORIZED INTRUSION ANALYSIS ASSISTANCE METHOD**
VORRICHTUNG UND VERFAHREN ZUR UNTERSTÜTZUNG DER ANALYSE VON UNBEFUGTEM EINDRINGEN
DISPOSITIF D'AIDE À L'ANALYSE D'INTRUSION NON AUTORISÉE ET PROCÉDÉ D'AIDE À L'ANALYSE D'INTRUSION NON AUTORISÉE

(30) Priority: 02.03.2021 JP 2021032480
(43) Date of publication of application: 05.07.2023
(73) Proprietor: Hitachi, Ltd., Tokyo 100-8280 (JP)
(72) Inventor: SUZUKI, Atsushi, Tokyo 100-8280 (JP); CHEN, Yiwen, Tokyo 100-8280 (JP); YAMAZAKI, Hiroki, Tokyo 100-8280 (JP); IJIMA, Kengo, Tokyo 100-8280 (JP)
(74) Representative: MERH-IP Matias Erny Reichl Hoffmann Patentanwälte PartG mbB
(86) International application number: PCT/JP2021/033101
(87) International publication number: WO 2022/185576

(56) References cited:
- CN-A- 101 236 584
- CN-A- 108 647 299
- CN-A- 109 376 531
- JP-A- 2015 052 841
- JP-A- 2019 049 800

## Description

### [Technical Field]

The present invention relates to an unauthorized intrusion analysis support apparatus and an unauthorized intrusion analysis support method.

### [Background Art]

With spread of products that can be coupled to the Internet (IoT (Internet of things) products), ensuring security against unauthorized intrusions (cyberattacks) to these IoT products has become an important problem. Thus, business operators are each required to handle cyber information such as information on security threats and vulnerabilities to guarantee security in operations of the IoT products, according to rules such as regulations. To this end, the business operator needs to perform work of collecting and classifying pieces of cyber information. However, the amount of cyber information is enormous and analysis and classification thereof take time.

As a technique that can contribute to execution of such work, PTL 1 describes the following technique. A security information management apparatus collects security information that is information on security, refers to a security dictionary in which keywords relevant to security are stored attribute by attribute to extract a keyword from reference source security information that is a source to be compared with the security information for relevance, compares the extracted keyword with a keyword included in the collected security information to calculate a relevance degree between the reference source security information and the security information, and preferentially outputs the security information whose calculated relevance degree is high. PTL 2 addresses the inefficiencies of the Boyer-Moore (BM) algorithm in intrusion detection systems by introducing a new pattern matching algorithm. This algorithm focuses on matching rare characters within short pattern strings, which are common in intrusion detection rules. It extracts uncommon characters from network data and uses them to quickly locate and verify pattern strings in network traffic. The method combines the BM algorithm and the new rare character matching algorithm, selecting the appropriate one based on the pattern string length, to enhance matching speed and efficiency, especially for short strings. [Citation List]

### [Patent Literature]

[PTL 1] International Patent Application Publication No. WO2014/208427
[PTL 2] CN 108 647 299 A

### [Summary of Invention]

### [Technical Problem]

Since IoT apparatuses include products of various fields, the pieces of cyber information need to be classified depending on the fields. However, in PTL 1, the relevance between the pieces of security information is determined based on the keywords. Accordingly, when there is a keyword used across multiple fields, there is a risk that classification not taking into consideration of the field of the security information is performed. Particularly, since security in each field is highly specialized, there is a possibility that a specialist in each field cannot properly use the security information in PTL 1.

The present invention has been made in view of the aforementioned background and an object thereof is to provide an unauthorized intrusion analysis support apparatus and an unauthorized intrusion analysis support method that can classify pieces of information related to an unauthorized intrusion depending on fields.

### [Solution to Problem]

The invention is set out in the appended set of claims. Preferable embodiments are defined in the dependent claims.

### [Advantageous Effects of Invention]

The present invention can classify pieces of information related to an unauthorized intrusion depending on fields.

Problems, configurations, and effects other than those described above are made apparent by the following description of an embodiment.

### [Brief Description of Drawings]

[Fig. 1] Fig. 1 is a diagram illustrating an example of a configuration of an unauthorized intrusion analysis support system according to the present embodiment.
[Fig. 2] Fig. 2 is a diagram explaining an example of functions of an unauthorized intrusion analysis support apparatus.
[Fig. 3] Fig. 3 is a diagram illustrating an example of a field-by-field keyword DB.
[Fig. 4] Fig. 4 is a diagram illustrating an example of a field-by-field attack case DB.
[Fig. 5] Fig. 5 is a diagram illustrating an example of an exclusion keyword DB.
[Fig. 6] Fig. 6 is a diagram explaining an example of hardware included in each of apparatuses.
[Fig. 7] Fig. 7 is a sequence diagram explaining an outline of processing performed in the unauthorized intrusion analysis support system.
[Fig. 8] Fig. 8 is a sequence diagram for explaining an outline of processing performed by the unauthorized intrusion analysis support apparatus.
[Fig. 9] Fig. 9 is a flowchart for explaining an example of keyword extraction processing.
[Fig. 10] Fig. 10 is a flowchart for explaining an example of relevance degree assumption processing.
[Fig. 11] Fig. 11 is a flowchart for explaining an example of exclusion processing.
[Fig. 12] Fig. 12 is a diagram illustrating an example of a relevance information display screen in which relevance information is displayed.
[Fig. 13] Fig. 13 is a diagram for explaining other function examples of the unauthorized intrusion analysis support apparatus.

### [Description of Embodiments]

An embodiment of the present invention is described below based on the drawings. Note that embodiments are not limited to the embodiment described below.

### --System Configuration-

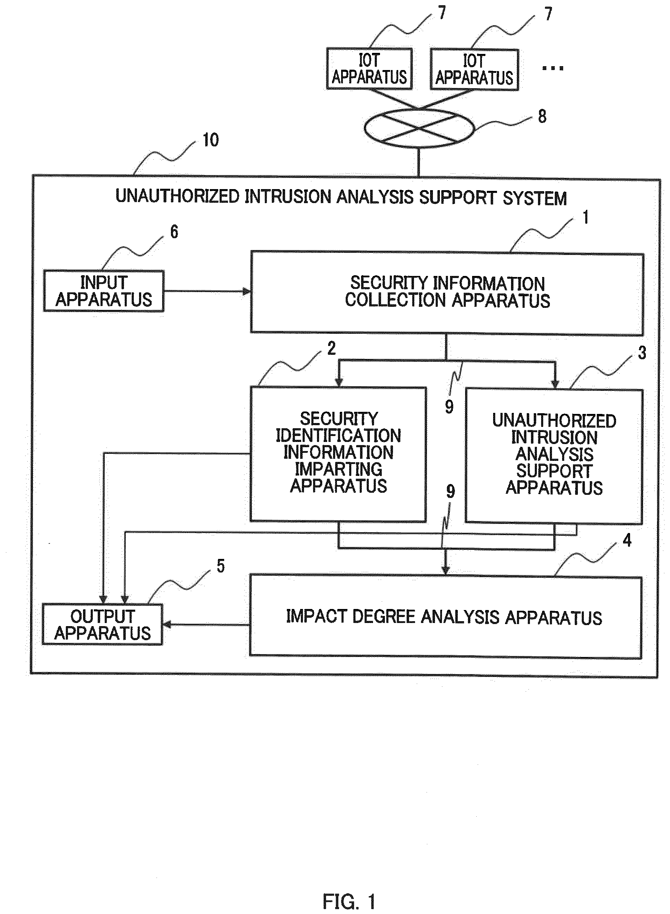

Fig. 1 is a diagram illustrating an example of a configuration of an unauthorized intrusion analysis support system 10 according to the present embodiment. The unauthorized intrusion analysis support system 10 is configured to include an input apparatus 6 such as a keyboard, a mouse, or a touch panel that receives inputs from a user, a security information collection apparatus 1 that obtains security information to be described later from one or multiple IoT apparatuses 7 (IoT: Internet of things), a security identification information imparting apparatus 2, an unauthorized intrusion analysis support apparatus 3, an impact degree analysis apparatus 4 that generates information on a threat of an unauthorized intrusion (cyberattack) to each of the IoT apparatuses 7 based on information received from the security identification information imparting apparatus 2 and the unauthorized intrusion analysis support apparatus 3, information on specifications of the IoT apparatus 7, and the like, and an output apparatus 5 such as a monitor (display) that displays the information generated by the security identification information imparting apparatus 2, the unauthorized intrusion analysis support apparatus 3, and the impact degree analysis apparatus 4 on a screen.

The security information is information outputted by each IoT apparatus 7 or information obtained by processing the information outputted by each IoT apparatus 7 and is information on multiple texts (hereinafter, referred to as security texts) relevant to the unauthorized intrusion to the IoT apparatus 7. The security information is, for example, information on a security attack on the IoT apparatus 7 via a communication network 8 or the like or information indicating a security vulnerability. The security texts include texts of various technical fields to which the respective IoT apparatuses 7 belong.

The security identification information imparting apparatus 2 creates information (security identification information) indicating a type of the unauthorized intrusion performed on each IoT apparatus 7 based on the security information (security texts) obtained by the security information collection apparatus 1, according to a predetermined classification method.

The unauthorized intrusion analysis support apparatus 3 identifies the security text related to the field which the user is in charge of, from the pieces of security information (multiple security texts) obtained by the security information collection apparatus 1 and creates information on the identified security text.

Note that the security information collection apparatus 1 and each of the IoT apparatuses 7 are communicably coupled to each other via the wired or wireless communication network 8 such as, for example, the Internet or a LAN (local area network) .

Moreover, the security information collection apparatus 1, the security identification information imparting apparatus 2, the unauthorized intrusion analysis support apparatus 3, and the impact degree analysis apparatus 4 are communicably coupled to one another via a wired or wireless communication network 9 such as, for example, a LAN (local area network), a WAN (wide area network), the Internet, or an exclusive line.

Next, details of the unauthorized intrusion analysis support apparatus 3 are described.

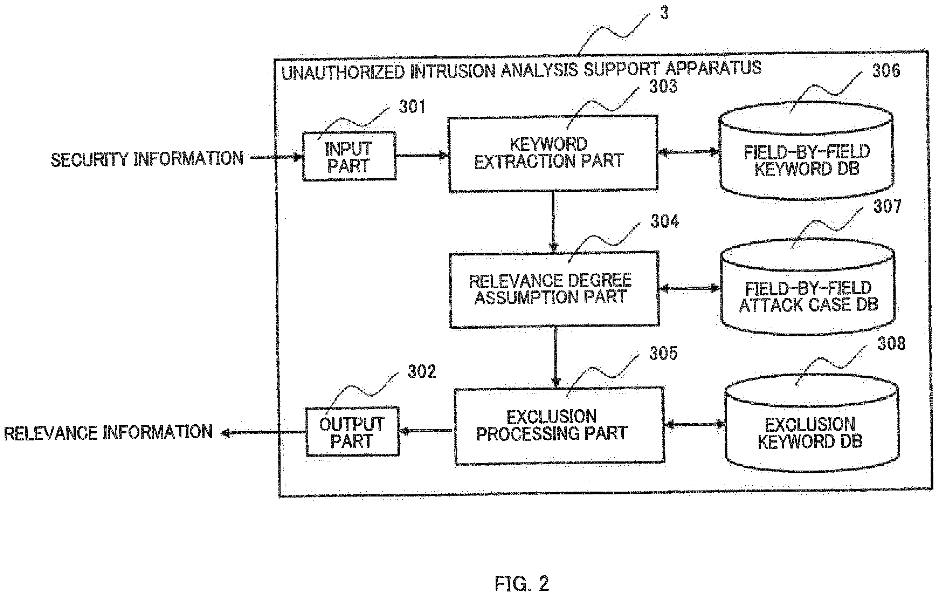

Fig. 2 is a diagram explaining an example of functions of the unauthorized intrusion analysis support apparatus 3.

The unauthorized intrusion analysis support apparatus 3 includes function parts of an input part 301, a keyword extraction part 303, a relevance degree assumption part 304, an exclusion processing part 305, and an output part 302.

Moreover, the unauthorized intrusion analysis support apparatus 3 includes databases of a field-by-field keyword DB 306, a field-by-field attack case DB 307, and an exclusion keyword DB 308.

The input part 301 receives an input of the field which the user is in charge of, through an input from the user on the input apparatus 6. Moreover, the input part 301 obtains the security information (security texts) from the security information collection apparatus 1.

The keyword extraction part 303 extracts words that are relevant to the unauthorized intrusion to the IoT apparatus 7 and that are included in the field inputted by the user (hereinafter, referred to as user field), from a text relevant to the unauthorized intrusion, based on the field-by-field keyword DB 306.

The relevance degree assumption part 304 calculates a relevance degree between the words extracted by the keyword extraction part 303 and a mode of the unauthorized intrusion based on the extracted words and the field-by-field attack case DB 307 that is information on the mode of the unauthorized intrusion in the field inputted by the user. When the calculated relevance degree is equal to or higher than a predetermined threshold, the security text is assumed to be a text about the unauthorized intrusion in the field inputted by the user.

The exclusion processing part 305 determines whether a predetermined word (hereinafter, referred to as exclusion keyword) is included in the words of the field inputted by the user in the security text when the relevance degree calculated by the relevance degree assumption part 304 exceeds the predetermined threshold. The exclusion processing part 305 assumes that the security text is the text about the unauthorized intrusion in the field inputted by the user only when the exclusion keyword is not included in the words.

The output part 302 outputs information (hereinafter, referred to as relevance information) indicating that the security text is the text about the unauthorized intrusion in the field inputted by the user.

### (Field-by-field Keyword DB)

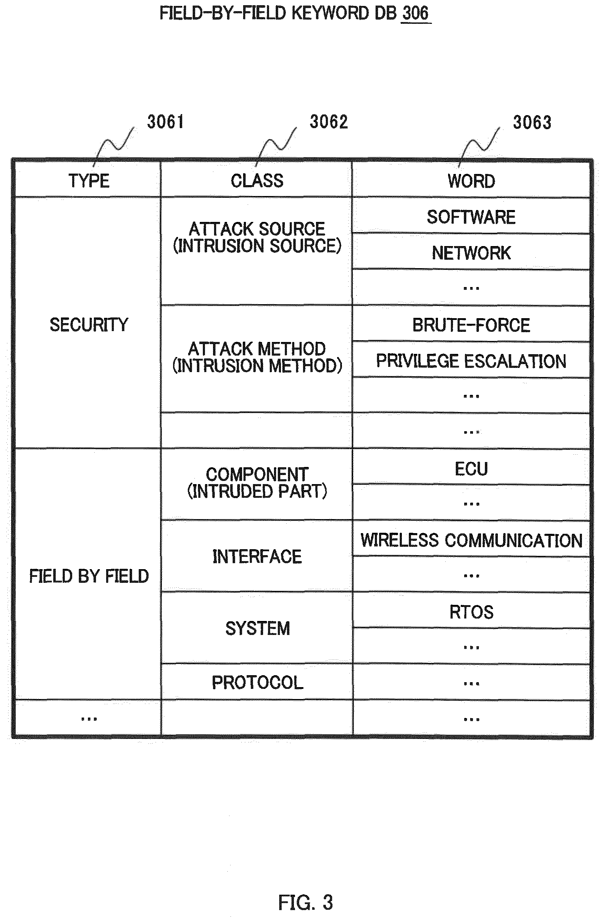

Fig. 3 is a diagram illustrating an example of the field-by-field keyword DB 306. The field-by-field keyword DB 306 is a word database including types 3061 of fields, classes 3062 (items (categories) indicating the modes of the unauthorized intrusions) in each field, and words 3063 (keywords) belonging to the types 3061 of the fields and the classes 3062.

Note that the types 3061 of the fields include "security" that is common to all fields and "field-by-field" other than the "security". Classes common to all fields such as an attack source of the unauthorized intrusion and an attack method of the unauthorized intrusion and classes characterizing fields such as "component", "interface", "system", and "protocol" are set in the classes 3062. Words that are relevant to the unauthorized intrusion and that are common to all fields such as "software" and "network" and words that are relevant to the unauthorized intrusion in a specific field such as "ECU" and "wireless communication" are set in the words 3063.

### (Field-by-field Attack Case DB)

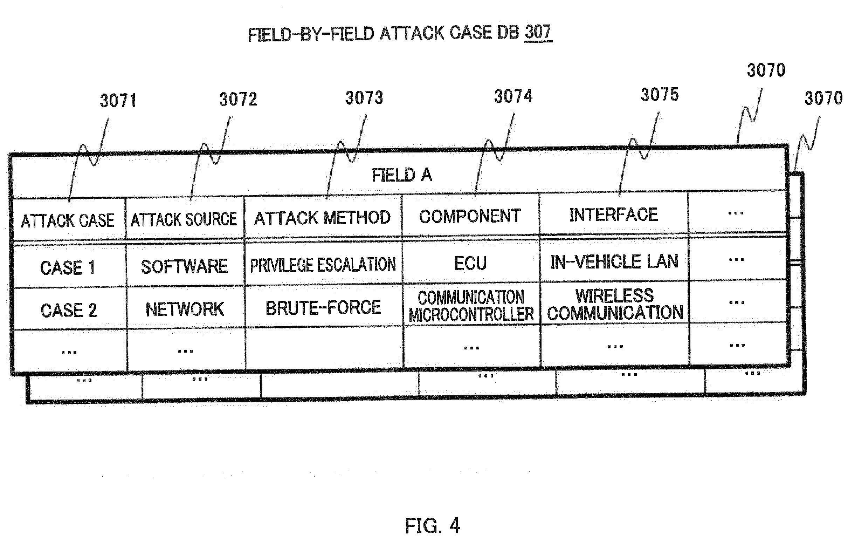

Fig. 4 is a diagram illustrating an example of the field-by-field attack case DB 307. The field-by-field attack case DB 307 is formed of one or multiple field databases 3070 storing the modes of attack cases (unauthorized intrusion cases) field by field. Each of the field databases 3070 includes pieces of information of an ID 3071 of each attack case in the corresponding field, an attack source 3072 in the attack case, an attack method 3073 in the attack case, an attack target component 3074 in the attack case, and an interface 3075 used in the attack case.

### (Exclusion Keyword DB)

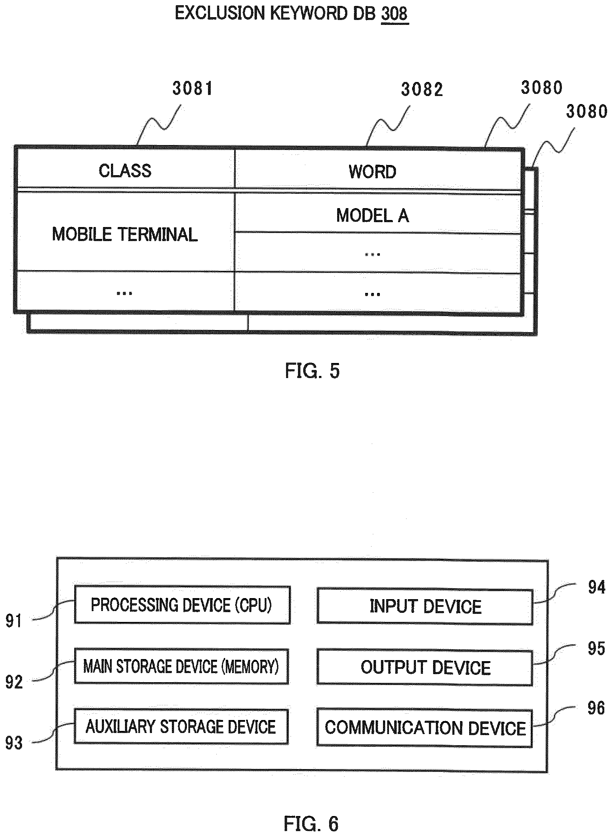

Fig. 5 is a diagram illustrating an example of the exclusion keyword DB 308. The exclusion keyword DB 308 includes exclusion keyword tables 3080 for the respective fields in which the exclusion keywords are stored. The exclusion keyword tables 3080 include pieces of information of target classes 3081 and exclusion words 3082 (exclusion keywords) in each class. The exclusion keywords are, for example, words not used in the corresponding field and are, for example, words from which the target security text is determined to be a text of a field irrelevant to the user field.

Fig. 6 is a diagram explaining an example of hardware included in each of the apparatuses (security information collection apparatus 1, security identification information imparting apparatus 2, unauthorized intrusion analysis support apparatus 3, and impact degree analysis apparatus 4). Each apparatus includes a processing device 91 such as a CPU (central processing unit), a memory 92 such as a RAM (random access memory) and a ROM (read only memory), an auxiliary storage device 93 such as an HDD (hard disk drive) or an SSD (solid state drive), and a communication device 96 such as a wireless network interface or a network interface card. Each apparatus may additionally include an input device 94 such as a keyboard, a mouse, or a touch panel and an output device 95 such as a monitor (display). The processing device 91 of each apparatus implements function parts of the apparatus by executing programs stored in the memory 92. These programs may be stored in, for example, a storage device such as a secondary storage device, a non-volatile semiconductor memory, a hard disk drive, or an SSD or a non-temporary data storage medium that can be read by each node such as an IC card, an SD card, or a DVD.

Next, processing performed in the unauthorized intrusion analysis support system 10 is described.

### --Processing-

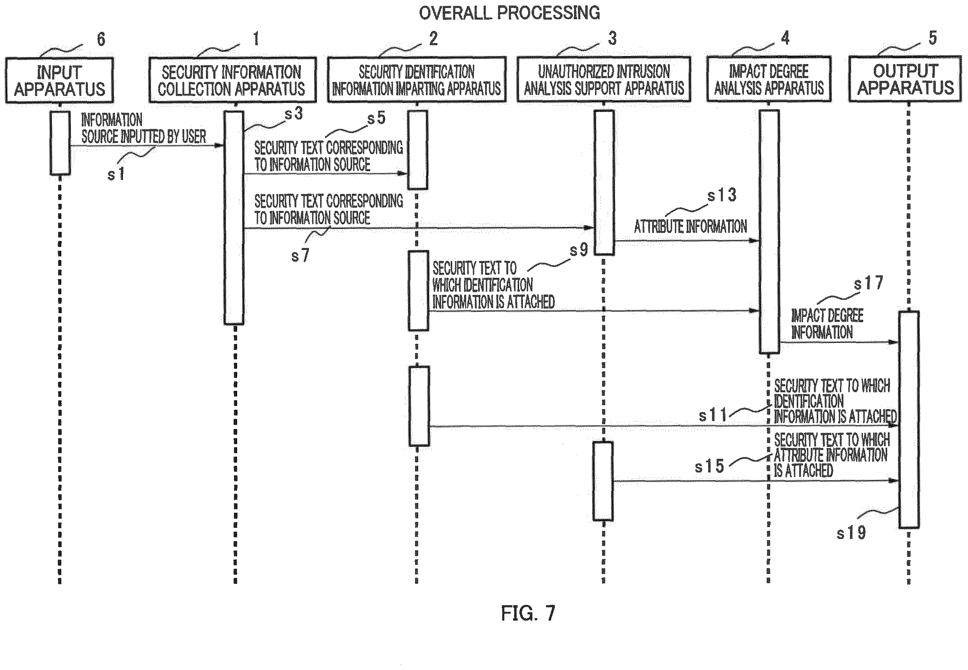

Fig. 7 is a sequence diagram explaining an outline of the processing performed in the unauthorized intrusion analysis support system 10. This processing is started, for example, when the input apparatus 6 receives a predetermined input from the user.

First, the input apparatus 6 receives an input of information (information source) identifying a group of the IoT apparatuses 7 to be analyzed from the user. Then, the input apparatus 6 transmits the inputted information source to the security information collection apparatus 1 (s1).

The security information collection apparatus 1 obtains the security information (one or multiple security texts) from the IoT apparatuses 7 corresponding to the information source received from the input apparatus 6 via the communication network 9 (s3).

The security information collection apparatus 1 transmits the obtained security texts to the security identification information imparting apparatus 2 and the unauthorized intrusion analysis support apparatus 3 (s5, s7).

The security identification information imparting apparatus 2 creates the security identification information based on each of the received security texts and transmits the created security identification information to the impact degree analysis apparatus 4 by attaching it to the security text (s9). Moreover, the security identification information imparting apparatus 2 transmits the security identification information to the output apparatus 5 by attaching it to the security text (s11).

Meanwhile, the unauthorized intrusion analysis support apparatus 3 creates the relevance information based on each of the received security texts and transmits the created relevance information to the impact degree analysis apparatus 4 (s13). Moreover, the unauthorized intrusion analysis support apparatus 3 transmits the relevance information to the output apparatus 5 by attaching it to the security text (s15).

The impact degree analysis apparatus 4 creates information (impact degree information) indicating an impact of the unauthorized intrusion on each IoT apparatus 7 based on the pieces of information (security identification information and relevance information) received from the security identification information imparting apparatus 2 and the unauthorized intrusion analysis support apparatus 3 and transmits the created impact degree information to the output apparatus 5 (s17).

The output apparatus 5 displays the pieces of information received from the security identification information imparting apparatus 2, the unauthorized intrusion analysis support apparatus 3, and the impact degree analysis apparatus 4 on a screen (s19).

Next, processing performed by the unauthorized intrusion analysis support apparatus 3 is described.

### -Processing of Unauthorized Intrusion Analysis Support Apparatus-

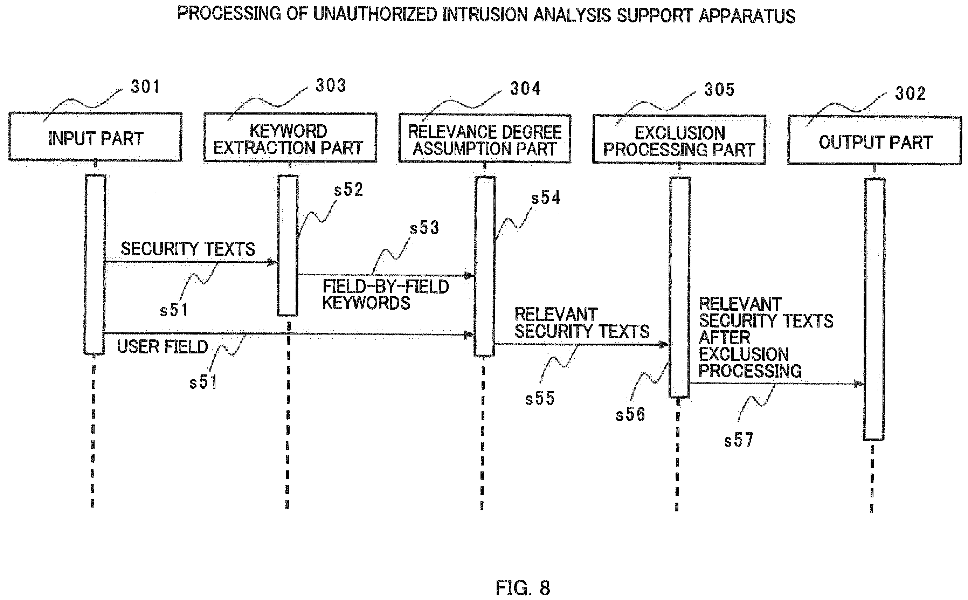

Fig. 8 is a sequence diagram for explaining an outline of the processing performed by the unauthorized intrusion analysis support apparatus 3. First, the input part 301 of the unauthorized intrusion analysis support apparatus 3 transmits the security texts received from the security information collection apparatus 1, to the keyword extraction part 303. Moreover, the input part 301 transmits the information on the field to which the user belongs (user field) to the relevance degree assumption part 304 (s51). For example, the input part 301 obtains the user field by receiving the information on the field inputted into the input apparatus 6 by the user from the input apparatus 6.

The keyword extraction part 303 executes keyword extraction processing s52 of extracting words in each of the received security texts together with the fields of the words as field-by-field keywords, and transmits the field-by-field keywords to the relevance degree assumption part 304 (s53).

When the relevance degree assumption part 304 receives the field-by-field keywords and the information on the user field, the relevance degree assumption part 304 calculates, for each security text, the relevance degree between the field-by-field keywords in the security text and the mode of the unauthorized intrusion in each field by referring to the field-by-field attack case DB 307. Then, the relevance degree assumption part 304 identifies the security texts (hereinafter, referred to as relevant security texts) related to the user field based on the relevance degrees (the above processing is relevance degree assumption processing s54). The relevance degree assumption part 304 transmits the created information on the relevant security texts to the exclusion processing part 305 (s55).

The exclusion processing part 305 executes exclusion processing s56 of excluding a text including the exclusion keyword among the relevant security texts and transmits the relevant security texts after the exclusion to the output part 302 (s57). Thereafter, the output part 302 outputs the relevance information based on the relevant security texts. The output apparatus 5 or the like displays the relevance information on a screen to present the relevance information to the user.

Details of each processing are described below.

### -Keyword Extraction Processing-

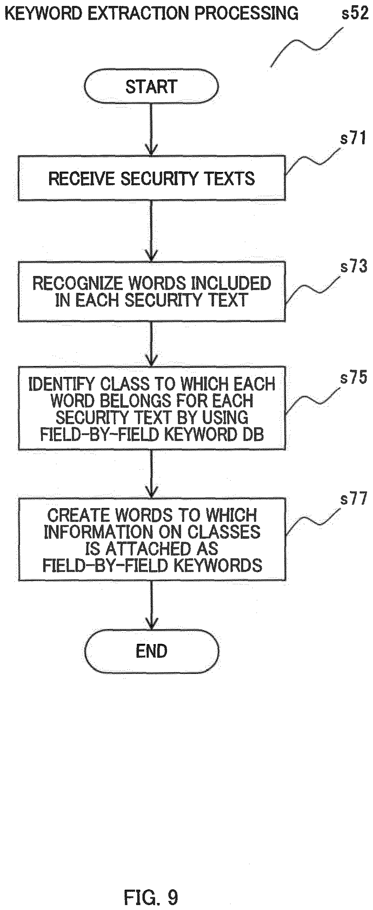

Fig. 9 is a flowchart for explaining an example of the keyword extraction processing s52. When the keyword extraction part 303 receives the security texts from the security information collection apparatus 1 (s71), the keyword extraction part 303 recognizes the words included in each of the received security texts (s73). For example, the keyword extraction part 303 identifies words forming each of the security texts.

The keyword extraction part 303 identifies the class to which each of the words recognized in s73 belongs (s75). For example, the keyword extraction part 303 obtains a record in which the same word 3063 as each of the words obtained in s73 is set, from the field-by-field keyword DB 306.

The keyword extraction part 303 creates information (field-by-field keywords) in which the words identified in s73 are associated respectively with the classes identified in s75, for each security text. The field-by-field keyword extraction processing is thus completed.

### -Relevance Degree Assumption Processing-

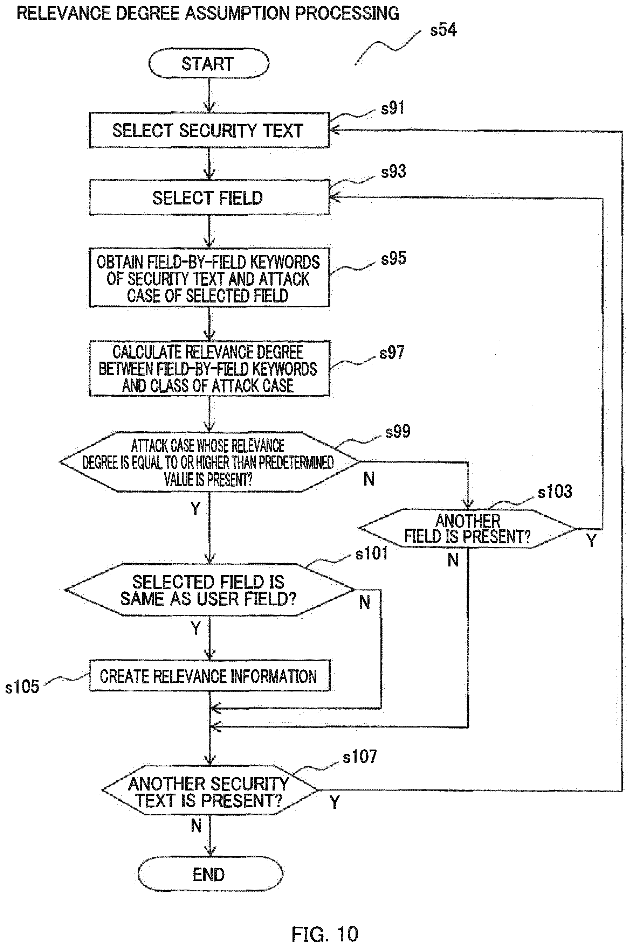

Fig. 10 is a flowchart for explaining an example of the relevance degree assumption processing. The relevance degree assumption part 304 selects one of the security texts (s91).

Then, the relevance degree assumption part 304 selects one field (s93). Specifically, the relevance degree assumption part 304 selects one of the field databases 3070 from the field-by-field attack case DB 307.

The relevance degree assumption part 304 obtains the field-by-field keywords of the security text selected in s91 and obtains the contents of the field database 3070 of the field-by-field attack case DB 307 selected in s93 (s95).

The relevance degree assumption part 304 calculates the relevance degree between the obtained field-by-field keywords and the mode (class) of the attack case indicated by the obtained field database 3070 (s97).

For example, the relevance degree assumption part 304 first sets a predetermined initial value for the relevance degree. Then, the relevance degree assumption part 304 performs the following processing for each of the records (each of the attack cases) in the field database 3070 obtained in s93. When the content of the attack source 3072 of this record is included in the field-by-field keywords in the class 3062 of "attack source" among the field-by-field keywords obtained in s93, the relevance degree assumption part 304 increments the relevance degree related to this attack case by one. Moreover, when the content of the attack method 3073 of this record is included in the field-by-field keywords in the class 3062 of "attack method" among the field-by-field keywords obtained in s93, the relevance degree assumption part 304 increments the relevance degree related to this attack case by one. The relevance degree assumption part 304 performs such processing for each of the classes (modes) such as the component 3074 and the interface 3075. Moreover, the relevance degree assumption part 304 repeats the aforementioned processing for all records (all attack cases) in the field database 3070.

Then, the relevance degree assumption part 304 determines whether there is an attack case whose relevance degree is equal to or higher than the predetermined threshold (s99). "There is an attack case whose relevance degree is equal to or higher than the predetermined threshold" means that, for example, the relevance degree matches the number of classes, that is the field-by-field keywords and the classes of a certain attack case completely correspond to one another. Note that, even if the relevance degree does not completely match the number of classes, the relevance degree assumption part 304 may determine YES in s99 when the number of matches is a certain number or higher.

When there is an attack case whose relevance degree is equal to or higher than the predetermined threshold (s99: Y), the relevance degree assumption part 304 executes the processing of s101. When there is no attack case whose relevance degree is equal to or higher than the predetermined threshold (s99: N), the relevance degree assumption part 304 executes the processing of s107.

In s103, the relevance degree assumption part 304 checks whether there is another field unselected in s93. When there is an unselected field (s103: Y), the processing of s93 and beyond is repeated for this field. When there is no unselected field (s103: N), the relevance degree assumption part 304 performs the processing of s107.

In s101, the relevance degree assumption part 304 checks whether the field selected in s93 matches the user field. When the field selected in s93 matches the user field (s101: Y), the relevance degree assumption part 304 executes the processing of s105. When the field selected in s93 does not match the user field (s101: N), the relevance degree assumption part 304 executes the processing of s107.

In s105, the relevance degree assumption part 304 creates the relevant information indicating that the security text selected in s91 is relevant to the field selected in s93 (that is the user field). For example, the relevance degree assumption part 304 creates information in which the security text selected in s91, the user field, and the relevance degree calculated in s97 are associated with one another. Thereafter, the processing of s107 is performed.

In s107, the relevance degree assumption part 304 checks whether there is another security text unselected in s91. When there is an unselected security text (s107: Y), the processing of s91 and beyond is repeated for this security text. When there is no unselected security text (s107: N), the relevance degree assumption processing is terminated.

Note that, in (s101: N) or (s103: N), the relevance degree assumption part 304 may create relevant information indicating that the security text selected in s91 is not relevant to the user field, as the relevance information.

Moreover, when the field selected in s93 does not match the user field in S101 but the relevance degree related to this field is equal to or higher than the predetermined value, the information on this field, the security text, and this relevance degree may be included in the relevance information. Information on a security text that is a text in a field other than the user field but has close relevance to the user field can be thereby provided to the user.

### -Exclusion Processing-

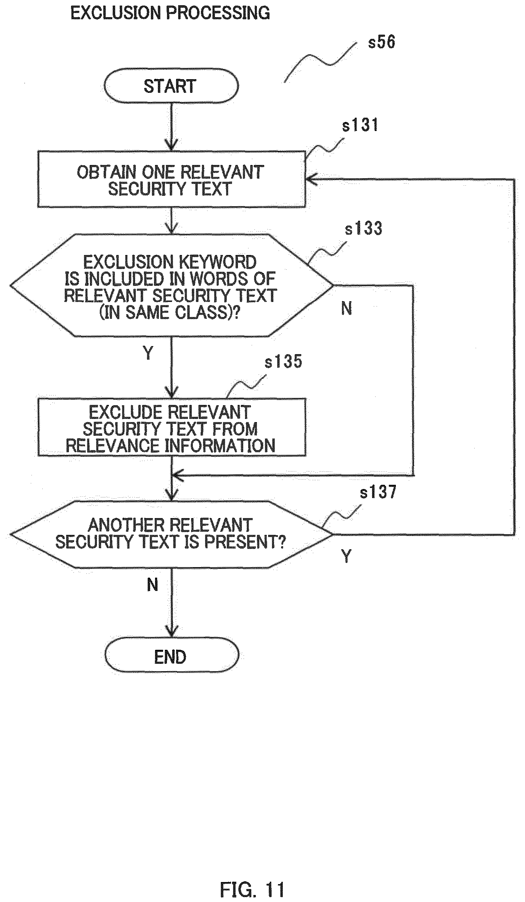

Fig. 11 is a flowchart for explaining an example of exclusion processing. The exclusion processing part 305 obtains one security text (relevant security text) that is identified by the relevance degree assumption processing and that is relevant to the user field (s131).

The exclusion processing part 305 determines whether the exclusion keyword is included in the words of the relevant security text in the same class (s133). Specifically, the exclusion processing part 305 identifies the class of each word in the relevant security text and determines whether the same word as the exclusion keyword in the identified class is included in the words of the relevant security text.

For example, the exclusion processing part 305 identifies the class of each word in the relevant security text by using the field-by-field keyword DB 306. Moreover, the exclusion processing part 305 identifies the exclusion keywords in the identified class from the exclusion words 3082 in the exclusion keyword table 3080 related to the user field in the exclusion keyword DB 308. The exclusion processing part 305 determines whether each of the words in the relevant security text is the same as any of the exclusion keywords in the class of the word.

When a word falling into the category of the exclusion keyword is included in the words in the relevant security text (s133: Y), the exclusion processing part 305 performs processing of s137. When no word falling into the category of the exclusion keyword is included in the words in the relevant security text (s133: N), the exclusion processing part 305 performs processing of s135.

In s135, the exclusion processing part 305 determines that the relevant security text obtained in s131 is not the security text in the user field, and deletes the information related to this relevant security text from the relevance information. Thereafter, the processing of s137 is performed. Note that the exclusion processing part 305 may create information indicating that the relevant security text is not the security text in the user field, instead of deleting the information.

In s137, the exclusion processing part 305 determines whether there is another relevant security text unobtained in s131. When there is no other relevant security text unobtained in s131 (s137: N), the exclusion processing is terminated. When there is another relevant security text unobtained in s131 (s137: Y), the exclusion processing part 305 repeats the processing of s131 and beyond for this relevant security text.

### -Relevance Information-

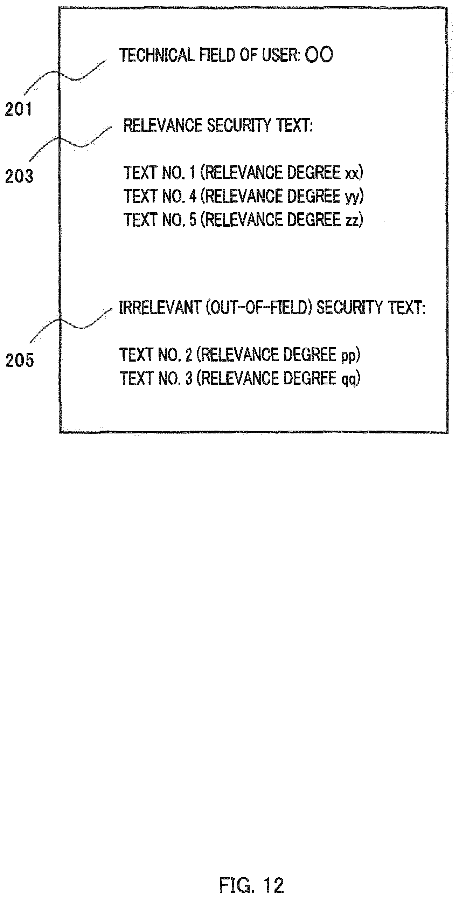

Fig. 12 is a diagram illustrating an example of a relevance information display screen 200 in which the relevance information is displayed. In the relevance information display screen 200, there are displayed information 201 on the field (user field) specified by the user, a list 203 of relevant security texts, and a list 205 of security texts that are not relevant security texts.

In the list 203 of relevant security texts, there are displayed information 207 (number, identifier, text itself, or the like) identifying each of the relevant security texts and the relevance degree of each relevant security text.

In the list 205 of security texts that are not relevant security texts, there are displayed information 207 (number, identifier, text itself, or the like) identifying each of the security texts and the relevance degree of each relevant security text.

Note that, for example, the unauthorized intrusion analysis support apparatus 3 or the output apparatus 5 displays the relevance information display screen 200.

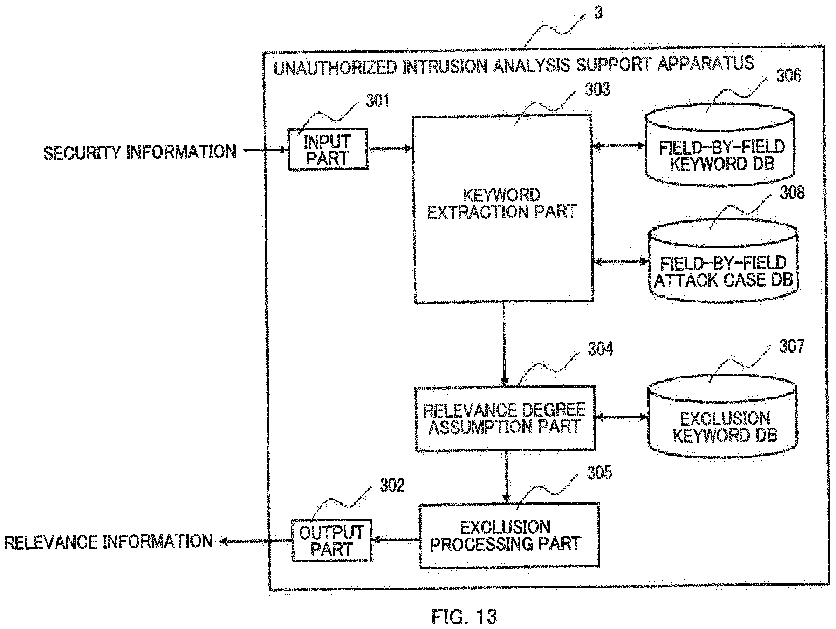

Lastly, Fig. 13 is a diagram for explaining other function examples of the unauthorized intrusion analysis support apparatus 3. The unauthorized intrusion analysis support apparatus 3 sets a class indicating that a word therein is the exclusion keyword. When any of the words in each security text is the exclusion keyword, the keyword extraction part 303 associates this word with the aforementioned class and sets the word as the field-by-field keyword based on the exclusion keyword DB 308 and the exclusion processing part 305 performs the exclusion processing based on this class.

As described above, the unauthorized intrusion analysis support apparatus 3 of the present embodiment extracts the words in the user field that are relevant to the unauthorized intrusion, from the security texts about the IoT apparatuses 7, calculates the relevance degree between the extracted words and the words of the mode of the unauthorized intrusion based on each of the extracted words and the field-by-field attack case DB 307 related to the user field, assumes that the security text is the text about the unauthorized intrusion in the user field when the relevance degree is equal to or higher than the predetermined threshold, and outputs the information indicating that the security text is the text about the unauthorized intrusion in the user field.

As described above, the unauthorized intrusion analysis support apparatus 3 can classify the pieces of information on the unauthorized intrusion depending on the fields. Specifically, the unauthorized intrusion analysis support apparatus 3 calculates the relevance between the words in the security text and the words of the mode of the unauthorized intrusion for each of the fields and determines that the security text is the text of the field when the relevance is high. The user can thereby easily grasp the security texts of the field that he/she is in charge of.

The present invention is not limited to the embodiment described above and includes various modified examples. The aforementioned embodiment is described in detail for better understanding of the present invention and the present invention is not necessarily limited to an embodiment including all described configurations.

For example, some of the functions included in each of the apparatus or terminals of the present embodiment may be provided in another apparatus or terminal and functions included in separate apparatuses or terminals may be provided in the same apparatus or terminal.

Moreover, the security text in the present embodiment may be audio data, an image, or other contents converted to a text.

Furthermore, the method of calculating the relevance degree is not limited to that described in the present embodiment. For example, the relevance degree may be calculated not only by using the number of matches of classes as in the present embodiment but also by multiplying a weight factor for each class, each word, or each field.

Moreover, although the number of user fields is assumed to be one in the present embodiment, the unauthorized intrusion analysis support apparatus 3 may receive an input of multiple user fields.

At least the following matters will become apparent from the above description in this embodiment. In other words, the unauthorized intrusion analysis support apparatus 3 may further comprise an exclusion processing part configured to determine whether a predetermined word is included in the words of the inputted field in the text when the calculated relevance degree exceeds the predetermined threshold and assume that the text is the text about the unauthorized intrusion in the inputted field only when the predetermined word is not included in the words.

Assuming that the security text is the text about the unauthorized intrusion in the user field when the relevance degree is high and additionally only when the exclusion keyword is not included in the words of the user field in the security text as described above allows the security text that has high relevance as a whole but does not fall into the user field due to presence of a specific keyword to be surely excluded and can prevent erroneous determination.

The relevance degree assumption part of the unauthorized intrusion analysis support apparatus 3 may use information on words indicating at least one of an intrusion source, an intrusion method, an intruded part, and a type of communication network related to the unauthorized intrusion as the information on the mode of the unauthorized intrusion, and may assume that the text is the text about the unauthorized intrusion in the inputted field when the number of matches between the extracted words and the words indicating the mode of the unauthorized intrusion is a predetermined number or higher.

Using the information on the words of the intrusion source, the intrusion method, the intruded part, or the type of communication network related to the unauthorized intrusion as the information on the mode of the unauthorized intrusion as described above allows the security texts about the unauthorized intrusion related to the user field for the IoT apparatuses 7 to be surely extracted.

The unauthorized intrusion analysis support apparatus 3 according to this embodiment mode, may determine whether a word indicating the mode of the unauthorized intrusion in a field other than the inputted field is included in the words of the inputted field in the text when the relevance degree has exceeded the predetermined threshold, and may assume that the text is the text about the unauthorized intrusion in the inputted field only when the predetermined word is not included in the words.

Assuming that the security text is the text about the unauthorized intrusion in the user field when the relevance degree is high and additionally only when the exclusion keyword outside the user field is not included in the words of the user field in the security text as described above allows the security text outside the user field to be surely excluded.

### [Reference Signs List]

10 unauthorized intrusion analysis support system
6 input apparatus
7 IoT apparatus
1 security information collection apparatus
2 security identification information imparting apparatus
3 unauthorized intrusion analysis support apparatus
4 impact degree analysis apparatus

## Claims

1. An unauthorized intrusion analysis support apparatus (3) including a processor and a memory, comprising
an input part (301) configured to receive an input of a field related to an unauthorized intrusion;
a keyword extraction part (303) corffigured to extract at least one word in the inputted field relevant to the unauthorized intrusion to an apparatus communicably coupled to a predetermined network from a text relevant to the unauthorized intrusion to the apparatus;
a relevance degree assumption part (304) configured to calculate a relevance degree between the extracted word and a mode of the unauthorized intrusion based on the extracted word and information on a word of the mode of the unauthorized intrusion in the inputted field and assume that the text is a text about the unauthorized intrusion in the inputted field when the calculated relevance degree is equal to or higher than a predetermined threshold; and
an output part (302) configured to output information indicating that the text is the text about the unauthorized intrusion in the field, wherein
the unauthorized intrusion analysis support apparatus (3) is **characterized in that**:
the relevance degree assumption part (304)
uses information on words indicating at least one of an intrusion source, an intrusion method, an intruded part, and a type of communication network related to the unauthorized intrusion as the information on the mode of the unauthorized intrusion, and
assumes that the text is the text about the unauthorized intrusion in the inputted field when the number of matches between the extracted words and the words indicating the mode of the unauthorized intrusion is a predetermined number or higher.

2. The unauthorized intrusion analysis support apparatus (3) according to claim 1, further comprising:
an exclusion processing part (305) configured to determine whether a predetermined word is included in the words of the inputted field in the text when the calculated relevance degree exceeds the predetermined threshold and assume that the text is the text about the unauthorized intrusion in the inputted field only when the predetermined word is not included in the words.

3. The unauthorized intrusion analysis support apparatus (3) according to claim 2, wherein
the exclusion processing part (305) determines whether a word indicating the mode of the unauthorized intrusion in a field other than the inputted field is included in the words of the inputted field in the text when the relevance degree has exceeded the predetermined threshold, and assumes that the text is the text about the unauthorized intrusion in the inputted field only when the predetermined word is not included in the words.

4. An unauthorized intrusion analysis support method implemented by an information processing apparatus, comprising
input processing of receiving an input of a field related to an unauthorized intrusion;
keyword extraction processing of extracting at least one word in the inputted field relevant to the unauthorized intrusion to an apparatus communicably coupled to a predetermined network from a text relevant to the unauthorized intrusion to the apparatus;
relevance degree assumption processing of calculating a relevance degree between the extracted word and a mode of the unauthorized intrusion based on the extracted word and information on a word of the mode of the unauthorized intrusion in the inputted field and assuming that the text is a text about the unauthorized intrusion in the inputted field when the calculated relevance degree is equal to or higher than a predetermined threshold; and
output processing of outputting information indicating that the text is the text about the unauthorized intrusion in the field, wherein
the unauthorized intrusion analysis support method is **characterized by**:
using via a relevance degree assumption part (304), information on words indicating at least one of an intrusion source, an intrusion method, an intruded part, and a type of communication network related to the unauthorized intrusion as the information on the mode of the unauthorized intrusion, and
assuming via the relevance degree assumption part (304), that the text is the text about the unauthorized intrusion in the inputted field when the number of matches between the extracted words and the words indicating the mode of the unauthorized intrusion is a predetermined number or higher.

## Patentansprüche

1. Vorrichtung (3) zur Unterstützung einer Analyse eines unbefugten Eindringens, die einen Prozessor und einen Speicher enthält, umfassend:
einen Eingabeteil (301), der konfiguriert ist, eine Eingabe eines Feldes zu empfangen, das sich auf ein unbefugtes Eindringen bezieht;
einen Schlüsselwortextraktionsteil (303), der konfiguriert ist, mindestens ein Wort in dem eingegebenen Feld, das für das unbefugte Eindringen relevant ist, für eine Vorrichtung, die kommunikativ mit einem vorbestimmten Netzwerk gekoppelt ist, aus einem Text zu extrahieren, der für das unbefugte Eindringen relevant ist, für die Vorrichtung;
einen Relevanzgradannahmeteil (304), der konfiguriert ist, einen Relevanzgrad zwischen dem extrahierten Wort und einem Modus des unbefugten Eindringens basierend auf dem extrahierten Wort und Informationen über ein Wort des Modus des unbefugten Eindringens in dem eingegebenen Feld zu berechnen und anzunehmen, dass der Text ein Text über das unbefugte Eindringen in dem eingegebenen Feld ist, wenn der berechnete Relevanzgrad gleich oder höher als ein vorbestimmter Schwellenwert ist und
einen Ausgabeteil (302), der konfiguriert ist Informationen auszugeben, die angeben, dass der Text der Text über das unbefugte Eindringen in dem Feld ist, wobei
die Vorrichtung (3) zur Unterstützung einer Analyse eines unbefugten Eindringens **dadurch**
**gekennzeichnet ist, dass**:
der Relevanzgradannahmeteil (304)
Informationen über Wörter, die mindestens eines von einer Eindringquelle, einem Eindringverfahren, einem Eindringteil und einem Typ eines Kommunikationsnetzwerks in Bezug auf das unbefugte Eindringen angeben, als die Informationen über den Modus des unbefugten Eindringens verwendet, und
annimmt, dass der Text der Text über das unbefugte Eindringen in dem eingegebenen Feld ist, wenn die Anzahl von Übereinstimmungen zwischen den extrahierten Wörtern und den Wörtern, die den Modus des unbefugten Eindringens angeben, eine vorbestimmte Anzahl oder höher ist

2. Vorrichtung (3) zur Unterstützung einer Analyse eines unbefugten Eindringens nach Anspruch 1, ferner umfassend:
einen Ausschlussverarbeitungsteil (305), der konfiguriert ist, zu bestimmen, ob ein vorbestimmtes Wort in den Wörtern des eingegebenen Feldes in dem Text enthalten ist, wenn der berechnete Relevanzgrad den vorbestimmten Schwellenwert überschreitet, und anzunehmen, dass der Text der Text über das unbefugte Eindringen in dem eingegebenen Feld ist, nur wenn das vorbestimmte Wort nicht in den Wörtern enthalten ist.

3. Vorrichtung (3) zur Unterstützung einer Analyse eines unbefugten Eindringens nach Anspruch 2, wobei
der Ausschlussverarbeitungsteil (305) bestimmt, ob ein Wort, das den Modus des unbefugten Eindringens in einem anderen Feld als dem eingegebenen Feld angibt, in den Wörtern des eingegebenen Feldes in dem Text enthalten ist, wenn der Relevanzgrad den vorbestimmten Schwellenwert überschritten hat, und annimmt, dass der Text der Text über das unbefugte Eindringen in dem eingegebenen Feld ist, nur wenn das vorbestimmte Wort nicht in den Wörtern enthalten ist

4. Verfahren zur Unterstützung einer Analyse eines unbefugten Eindringens, das durch eine Informationsverarbeitungsworrichtung implementiert wird, umfassend:
Eingabeverarbeitung zum Empfangen einer Eingabe eines Feldes, das sich auf ein unbefugtes Eindringen bezieht;
Schlüsselwortextraktionsverarbeitung zum Extrahieren mindestens eines Wortes in dem eingegebenen Feld, das für das unbefugte Eindringen relevant ist, für eine Vorrichtung, die kommunikativ mit einem vorbestimmten Netzwerk gekoppelt ist aus einem Text, der für das unbefugte Eindringen relevant ist, für die Vorrichtung;
Relevanzgadannahmeuerarbeitung zum Berechnen eines Relevanzgrads zwischen dem extrahierten Wort und einem Modus des unbefugten Eindringens basierend auf dem extrahierten Wort und Informationen über ein Wort des Modus des unbefugten Eindringens in dem eingegebenen Feld und Annehmen, dass der Text ein Text über das unbefugte Eindringen in dem eingegebenen Feld ist, wenn der berechnete Relevanzgrad gleich oder höher als ein vorbestimmter Schwellenwert ist und
Ausgabeverarbeitung zum Ausgeben von Informationen, die angeben, dass der Text der Text über das unbefugte Eindringen in dem Feld ist, wobei
das Verfahren zur Unterstützung einer Analyse eines unbefugten Eindringens **gekennzeichnet ist durch**:
Verwenden, über einen Relevanzgradannahmeteil (304), von Informationen über Wörter, die mindestens eines von einer Eindringquelle, einem Eindringverfahren, einem Eindringteil und einem Typ eines Kommunikationsnetzwerks in Bezug auf das unbefugte Eindringen angeben, als die Informationen über den Modus des unbefugten Eindringens, und
Annehmen, über den Relevanzgradannahmeteil (304), dass der Text der Text über das unbefugte Eindringen in dem eingegebenen Feld ist, wenn die Anzahl von Übereinstimmungen zwischen den extrahierten Wörtern und den Wörtern, die den Modus des unbefugten Eindringens angeben, eine vorbestimmte Anzahl oder höher ist

## Revendications

1. Appareil de support d'analyse d'intrusion non autorisée (3) incluant un processeur et une mémoire, comprenant:
une partie d'entrée (301) configurée pour recevoir une entrée d'un champ lié à une intrusion non autorisée ;
une partie d'extraction de mot-dé (303) configurée pour extraire au moins un mot dans le champ entré pertinent pour l'intrusion non autorisée vers un appareil couplé en communication à un réseau prédéterminé à partir d'un texte pertinent pour l'intrusion non autorisée vers l'appareil ;
une partie de supposition de degré de pertinence (304) configurée pour calculer un degré de pertinence entre le mot extrait et un mode de l'intrusion non autorisée sur la base du mot extrait et d'informations sur un mot du mode de l'intrusion non autorisée dans le champ entré et supposer que le texte est un texte concernant l'intrusion non autorisée dans le champ entré lorsque le degré de pertinence calculé est égal ou supérieur à un seuil prédéterminé ; et
une partie de sortie (302) configurée pour délivrer en sortie des informations indiquant que le texte est le texte concernant l'intrusion non autorisée dans le champ, dans lequel
l'appareil de support d'analyse d'intrusion non autorisée (3) est **caractérisé en ce que** :
la partie de supposition de degré de pertinence (304)
utilise des informations sur des mots indiquant au moins l'un d'une source d'intrusion, d'un procédé d'intrusion, d'une partie intruie, et d'un type de réseau de communication lié à l'intrusion non autorisée en tant qu'informations sur le mode de l'intrusion non autorisée, et
suppose que le texte est le texte concernant l'intrusion non autorisée dans le champ entré lorsque le nombre de correspondances entre les mots extraits et les mots indiquant le mode de l'intrusion non autorisée est un nombre prédéterminé ou supérieur.

2. Appareil de support d'analyse d'intrusion non autorisée (3) selon la revendication 1, comprenant en outre :
une partie de traitement d'exclusion (305) configurée pour déterminer si un mot prédéterminé est indus dans les mots du champ entré dans le texte lorsque le degré de pertinence calculé dépasse le seuil prédéterminé et supposer que le texte est le texte concernant l'intrusion non autorisée dans le champ entré uniquement lorsque le mot prédéterminé n'est pas indus dans les mots.

3. Appareil de support d'analyse d'intrusion non autorisée (3) selon la revendication 2, dans lequel
la partie de traitement d'exclusion (305) détermine si un mot indiquant le mode de l'intrusion non autorisée dans un champ autre que le champ entré est indus dans les mots du champ entré dans le texte lorsque le degré de pertinence a dépassé le seuil prédéterminé, et suppose que le texte est le texte concernant l'intrusion non autorisée dans le champ entré uniquement lorsque le mot prédéterminé n'est pas indus dans les mots.

4. Procédé de support d'analyse d'intrusion non autorisée mis en œuvre par un appareil de traitement d'informations, comprenant :
un traitement d'entrée consistant à recevoir une entrée d'un champ lié à une intrusion non autorisée ;
un traitement d'extraction de mot-dé consistant à extraire au moins un mot dans le champ entré pertinent pour l'intrusion non autorisée vers un appareil couplé en communication à un réseau prédéterminé à partir d'un texte pertinent pour l'intrusion non autorisée vers l'appareil ;
un traitement de supposition de degré de pertinence consistant à calculer un degré de pertinence entre le mot extrait et un mode de l'intrusion non autorisée sur la base du mot extrait et d'informations sur un mot du mode de l'intrusion non autorisée dans le champ entré et supposer que le texte est un texte concernant l'intrusion non autorisée dans le champ entré lorsque le degré de pertinence calculé est égal ou supérieur à un seuil prédéterminé ; et
un traitement de sortie consistant à délivrer en sortie des informations indiquant que le texte est le texte concernant l'intrusion non autorisée dans le champ, dans lequel
le procédé de support d'analyse d'intrusion non autorisée est **caractérisé par** :
l'utilisation, via une partie de supposition de degré de pertinence (304), d'informations sur des mots indiquant au moins l'un d'une source d'intrusion, d'un procédé d'intrusion, d'une partie intruie, et d'un type de réseau de communication lié à l'intrusion non autorisée en tant qu'informations sur le mode de l'intrusion non autorisée, et
la supposition, via la partie de supposition de degré de pertinence (304), que le texte est le texte concernant l'intrusion non autorisée dans le champ entré lorsque le nombre de correspondances entre les mots extraits et les mots indiquant le mode de l'intrusion non autorisée est un nombre prédéterminé ou supérieur.
